# EUROPEAN PATENT APPLICATION

(11) **EP 4 262 158 A1**
(43) Date of publication of application: **18.10.2023**
(21) Application number: 23167724.6
(22) Date of filing: 13.04.2023
(51) Int. Cl.: H04L 12/46, H04L 41/0654, H04L 41/0659, H04L 41/0668, H04L 43/0805, H04L 43/0811, H04L 43/10, H04L 43/106, H04L 45/00, H04L 45/28, H04L 45/64, H04L 45/655, H04L 47/11, H04L 47/10, H04L 47/74, H04L 47/80, H04L 47/70, H04L 45/16

(54) **ROUTE DETECTION METHOD AND APPARATUS**

(30) Priority: 13.04.2022 CN 202210385763
(71) Applicant: Huawei Technologies Co., Ltd., Shenzhen, Guangdong 518129 (CN)
(72) Inventor: ZHANG, Yaokun, Shenzhen, 518129 (CN); WANG, Lei, Shenzhen, 518129 (CN); XIE, Jingrong, Shenzhen, 518129 (CN)
(74) Representative: Gill Jennings & Every LLP

(57) **Abstract**

Embodiments of this application provide a route detection method and apparatus, so that a network device in an automatic multicast tunneling network senses a fault of another network device in time. This avoids a case in which multicast traffic is interrupted for a long time because a device fault is not sensed for a long time, and improves stability of multicast communication. In the method, a first network device receives a first packet, and then sends, to a second network device, a first detection packet used to determine that a route is reachable, where the first packet includes an address of the second network device; and determines, when a response packet of the first detection packet is not received, that a route to the second network device is unreachable.

## Description

### TECHNICAL FIELD

This application relates to the field of communication technologies, and in particular, to a route detection method and apparatus.

### BACKGROUND

During multicast communication, some intermediate nodes between a multicast source (source) and a receiver (receiver) of a multicast packet may lack a multicast capability (Lack multicast capability), which is likely to cause transmission interruption of the multicast packet. Therefore, an automatic multicast tunneling (automatic multicast tunneling, AMT) technology is proposed currently to resolve the transmission interruption.

Currently, in an AMT network, a device connected to a multicast source is referred to as a relay (relay) device, a device connected to a receiver is referred to as a gateway (gateway) device, and the relay device and the gateway device are connected through an intermediate network that lacks a multicast capability. In the AMT network, after receiving a multicast packet from the multicast source, the relay device encapsulates the multicast packet into a unicast packet, and forwards the unicast packet to the gateway device through the intermediate network that lacks the multicast capability. Then, the gateway device performs multicast forwarding after processing the received unicast packet into a multicast packet.

During long-term network running, it may be inevitable that a device (or a link in which the device is located) may be faulty and a route to the device is unreachable, and an unreachable route to a device in the AMT network means that multicast traffic passing through the device may be interrupted.

However, no effective detection mechanism exists between different devices in the current AMT network. Because a device fault is not sensed for a long time, multicast traffic is likely to be interrupted for a long time, and stability of multicast communication is affected.

### SUMMARY

Embodiments of this application provide a route detection method and apparatus, to avoid a case in which multicast traffic is interrupted because a device fault is not sensed for a long time, and help improve stability.

A first aspect of embodiments of this application provides a route detection method, applied to an AMT network. The method is performed by a first network device, or the method is performed by some components (for example, a processor, a chip, or a chip system) in the first network device, or the method is implemented by a logical module or software that can implement all or some functions of the first network device. In the first aspect and the possible implementations of the first aspect, an example in which the route detection method is performed by the first network device is used for description, where the first network device is a device such as a router, a switch, or a virtual machine. In the method, the first network device receives a first packet, and then sends a first detection packet to a second network device, where the first packet includes an address of the second network device; and determines, when a response packet of the first detection packet is not received, that a route to the second network device is unreachable.

Based on the foregoing technical solution, the first network device receives the first packet including the address of the second network device, and then sends the first detection packet to the second network device; and determines, when determining that the response packet of the first detection packet is not received, that the route to the second network device is unreachable. In other words, after obtaining the address of the second network device from the first packet, the first network device detects the second network device based on the first detection packet, and determines, when the response packet of the first detection packet is not received, that the route to the second network device is unreachable. Therefore, after obtaining an address of another network device, a network device in the AMT network may sense a fault of the another network device in time based on the first detection packet. This avoids a case in which multicast traffic is interrupted for a long time because a device fault is not sensed for a long time, and improves stability of multicast communication.

Optionally, the first network device determines, when receiving the response packet of the first detection packet, that the route to the second network device is reachable.

In a possible implementation of the first aspect, the first network device is a relay device, and the second network device is a gateway device.

Based on the foregoing technical solution, the first network device may be the relay device in the AMT network, and the second network device may be the gateway device in the AMT network, so that after the relay device in the AMT network obtains an address of the gateway device, the relay device may detect the gateway device based on a first detection packet, and can sense a fault in time when the gateway device is faulty.

Optionally, when the first network device is a relay device, and the second network device is a gateway device, the method further includes: The first network device clears internet group management protocol (internet group management protocol, IGMP) entries or multicast listener discovery protocol (multicast listener discovery, MLD) entries of the second network device; and/or stops sending multicast traffic to the second network device.

Based on the foregoing technical solution, after the relay device in the AMT network senses that the route to the gateway device is unreachable, the relay device may clear the IGMP entries or the MLD entries of the gateway device, so as to remove the gateway device from a multicast group. In addition, after the relay device in the AMT network senses that the route to the gateway device is unreachable, the relay device may also determine to stop sending the multicast traffic to the second network device, so as to reduce unnecessary overheads.

In a possible implementation of the first aspect, the first packet is a relay discovery packet, and that the first network device receives a first packet includes: The first network device receives the relay discovery packet from the second network device.

Based on the foregoing technical solution, when the first network device may be the relay device in the AMT network, and the second network device may be the gateway device in the AMT network, the first packet may be a relay discovery (relay discovery) packet sent by the gateway device in the AMT network, where the relay discovery packet is used to discover the relay device. Therefore, when the relay device is used as the first network device to perform the technical solution, after the relay device receives the relay discovery packet from the gateway device to obtain an address of the gateway device, in other words, when the relay device determines that multicast traffic may be subsequently sent to the gateway device, the relay device may use a process of sending the first detection packet, so as to detect the gateway device, and can sense a fault in time when the gateway device is faulty.

In a possible implementation of the first aspect, the first packet is a redirection packet, and that the first network device receives a first packet includes: The first network device receives the redirection packet from a third network device, where the redirection packet is a packet obtained based on a relay discovery packet from the second network device, and the third network device is a relay device different from the first network device.

Based on the foregoing technical solution, when the first network device may be the relay device in the AMT network, and the second network device may be the gateway device in the AMT network, the first packet may be the redirection packet sent by the third network device that is in the AMT network and that is different from the first network device, and the third network device is the relay device different from the first network device. The redirection packet carries an address of the gateway device for indicating the first network device to process a multicast access request of the gateway device. Therefore, when the relay device is used as the first network device to perform the technical solution, after the relay device receives a redirection packet from another relay device to obtain an address of the gateway device, in other words, when the relay device determines that multicast traffic is to be subsequently sent to the gateway device, the relay device may use a process of sending the first detection packet, so as to detect the gateway device, and can sense a fault in time when the gateway device is faulty.

In a possible implementation of the first aspect, the first network device is a gateway device, the second network device is a relay device, and the first packet is a relay advertisement packet.

Based on the foregoing technical solution, when the first network device may be the gateway device in the AMT network, and the second network device may be the relay device in the AMT network, the first packet may be a relay advertisement (relay advertisement) packet sent by the gateway device in the AMT network, and the relay advertisement packet is used to advertise information about the relay device. Therefore, when the gateway device is used as the first network device to perform the technical solution, after the gateway device receives the relay advertisement packet from the relay device to obtain an address of the relay device, in other words, when the gateway device determines that multicast traffic from the relay device may be subsequently received, the gateway device may use a process of sending the first detection packet, so as to detect the relay device, and can sense a fault in time when the relay device is faulty.

In a possible implementation of the first aspect, after that the first network device determines that the route to the second network device is unreachable, the method further includes: The first network device sends a relay discovery packet.

Optionally, that the first network device sends a relay discovery packet includes: The first network device sends the relay discovery packet to a fourth network device, where the fourth network device is a relay device different from the second network device.

Based on the foregoing technical solution, when the first network device may be the gateway device in the AMT network, and the second network device may be the relay device in the AMT network, after the gateway device determines that the route to the relay device is unreachable, the gateway device may resend the relay discovery packet, to discover a new relay device and obtain multicast traffic from the new relay device.

In a possible implementation of the first aspect, the method further includes: The first network device determines, when determining that a quantity of times of sending the first detection packet reaches a threshold and the response packet of the first detection packet is not received within preset duration, that the response packet of the first detection packet is not received. Alternatively, the first network device starts a first timer when sending the first detection packet, and determines, when the response packet of the first detection packet is not received after the first timer expires, that the response packet of the first detection packet is not received.

Based on the foregoing technical solution, in a process in which the first network device sends the first detection packet, the first network device may accumulate the quantity of times of sending the first detection packet, and when a result of the accumulation reaches the threshold and the first network device does not receive the response packet of the first detection packet, the first network device may determine that the second network device makes no response to the first detection packet, in other words, the first network device may determine that the route to the second network device is unreachable. Alternatively, in a process in which the first network device sends the first detection packet, the first network device may start, when sending the first detection packet, the first timer corresponding to the first detection packet, and may determine, when the response packet of the first detection packet is not received after the first timer expires, that the second network device makes no response to the first detection packet, in other words, the first network device may determine that the route to the second network device is unreachable.

Optionally, when receiving the response packet of the first detection packet, the first network device determines that the route to the second network device is reachable. Correspondingly, a case in which the first network device determines that the response packet of the first detection packet is received may include: The first network device receives, after a quantity of times of sending the first detection packet reaches a threshold, one or more response packets corresponding to the first detection packet. Alternatively, the first network device starts a first timer when sending the first detection packet, and determines, before the first timer expires, that the one or more response packets corresponding to the first detection packet are received.

Optionally, in a process in which the first network device sends a plurality of first detection packets, interval duration between two consecutive times of sending the first detection packets is greater than or equal to duration (namely, duration from start to timeout of the first timer) corresponding to the first timer.

In a possible implementation of the first aspect, the first detection packet includes first indication information indicating to enable route detection and second indication information indicating a first detection manner.

Based on the foregoing technical solution, the first detection packet may include the first indication information indicating to enable the route detection and the second indication information indicating the first detection manner, so that a receiver of the first detection packet knows that a sender of the first detection packet has used a detection process corresponding to the first detection manner, and may subsequently perform keepalive detection with the sender of the first detection packet in the first detection manner.

Optionally, the first indication information and the second indication information respectively indicate to enable the route detection and indicate the first detection manner. In actual application of the solution, the first indication information and the second indication information may be implemented by using a same field in the first detection packet, or may be implemented by using different fields in the first detection packet. This is not limited herein.

Optionally, the first detection packet is an AMT packet.

In a possible implementation of the first aspect, the first detection packet includes first indication information indicating to enable route detection and third indication information indicating a second detection manner.

Based on the foregoing technical solution, the first detection packet may include the first indication information indicating to enable the route detection and the third indication information indicating the second detection manner, so that a receiver of the first detection packet knows that a sender of the first detection packet has used a detection process corresponding to the second detection manner, and may subsequently perform keepalive detection with the sender of the first detection packet in the second detection manner.

Optionally, the first indication information and the third indication information respectively indicate to enable the route detection and indicate the second detection manner. In actual application of the solution, the first indication information and the third indication information may be implemented by using a same field in the first detection packet, or may be implemented by using different fields in the first detection packet. This is not limited herein.

In a possible implementation of the first aspect, the first detection packet further includes a parameter indicating a sending frequency of the first detection packet and a parameter indicating a sending frequency of a second detection packet, and the second detection packet is used to determine that a route is reachable. The method further includes: The first network device sends the second detection packet to the second network device, where the sending frequency of the second detection packet is higher than the sending frequency of the first detection packet. The first network device determines, when a response packet of the second detection packet is not received, that the route to the second network device is unreachable.

Based on the foregoing technical solution, when detecting the second network device based on the first detection packet, the first network device may further detect the second network device based on the second detection packet, where the sending frequency of the second detection packet is higher than the sending frequency of the first detection packet. Therefore, when performing keepalive detection on the second network device based on the first detection packet with a lower detection frequency, the first network device may further implement keepalive detection on the second network device based on the second detection packet with a higher frequency, so as to improve sensitivity of keepalive detection.

It should be understood that, the first detection manner is different from the second detection manner. The first detection manner is a detection manner of using the first detection packet. Therefore, the first detection manner may also be expressed as a detection manner of using the first detection packet, a detection manner of using a keepalive process of the first detection packet, a detection manner of using only the first detection packet, a detection manner of using only a keepalive process of the first detection packet, or another description. This is not limited herein. Similarly, the second detection manner is a detection manner of using at least two detection packets, and the at least two detection packets include the first detection packet. Therefore, the first detection manner may also be expressed as a detection manner of using the at least two detection packets, a detection manner of using a keepalive process of the at least two detection packets, or another description. This is not limited herein.

Optionally, the first detection packet is an AMT packet, and the second detection packet is a non-AMT packet.

In addition, the first network device may flexibly select, on the basis of using the first detection packet, whether to using the second detection packet. For example, the second indication information indicating the first detection manner and the third indication information indicating the second detection manner may be different values of a same field in the first detection packet. The first network device may set a value of the same field in the first detection packet to a first value as an implementation of the second indication information, to indicate to use the first detection manner. Alternatively, the first network device may set a value of the same field in the first detection packet to a second value as an implementation of the third indication information, to indicate to use the second detection manner. For another example, the second indication information indicating the first detection manner and the third indication information indicating the second detection manner may be in different fields in the first detection packet. The first network device may set a value of a first field in the first detection packet to a valid value as an implementation of the second indication information, to indicate to use the first detection manner. Alternatively, the first network device may set a value of a second field in the first detection packet to a valid value as an implementation of the third indication information, to indicate to use the second detection manner. Alternatively, this is implemented in another manner. This is not limited herein. In addition, the two manners have respective corresponding beneficial effects. In actual application of the solution, either of the two manners may be selected. When the first network device indicates to use the second detection manner, a gain of performing keepalive detection and detection with higher detection sensitivity by using a plurality of detection packets (namely, at least two detection packets) may be obtained. When the first network device indicates to use the first detection manner (in other words, not to use the second detection packet), signaling overheads can be reduced.

In a possible implementation of the first aspect, the second detection packet is a bidirectional forwarding detection (bidirectional forwarding detection, BFD) packet or a network quality analysis (network quality analysis, NQA) packet.

Optionally, the BFD packet includes a two-arm BFD packet or a one-arm BFD packet.

Based on the foregoing technical solution, the second detection packet may include one or more of packets used to implement keepalive detection, for example, one or more of the BFD packet and the NQA packet, so as to obtain a gain of performing keepalive detection and detection with higher detection sensitivity by using a plurality of detection packets.

In a possible implementation of the first aspect, the sending frequency of the first detection packet is 0.

Based on the foregoing technical solution, when the first detection packet includes the first indication information indicating to enable the route detection and the third indication information indicating the second detection manner, the first network device uses the detection process corresponding to the second detection manner, in other words, the first network device uses a detection process of the first detection packet and the second detection packet. In this case, signaling overheads can be reduced by setting the sending frequency of the first detection packet to 0.

In addition, when the first detection packet is the AMT packet and the second detection packet is the non-AMT packet, the first network device may trigger, by using the AMT packet (namely, the first detection packet), the non-AMT packet (namely, the second detection packet) used to determine that a route is reachable, so that different network devices in the AMT network can implement keepalive detection based on the triggering of the AMT packet by using the non-AMT packet with a high sending frequency.

In a possible implementation of the first aspect, the first detection packet is a BFD packet or an NQA packet.

Based on the foregoing technical solution, when the first detection packet is the BFD packet or the NQA packet, after obtaining an address of the another network device, the network device in the AMT network may sense a fault of the another network device in time based on the BFD packet or the NQApacket with a high sending frequency, to implement high-sensitivity keepalive detection.

A second aspect of embodiments of this application provides a route detection apparatus. The apparatus is disposed on a first network device in an AMT multicast network. The apparatus may implement the method according to any one of the first aspect or the possible implementations of the first aspect. The apparatus includes a corresponding unit or module configured to perform the foregoing method. The unit or module included in the apparatus can be implemented by software and/or hardware. For example, the apparatus may be a first network device, or the apparatus may be a component (for example, a processor, a chip, or a chip system) in the first network device, or the apparatus may be a logical module or software that can implement all or some functions of the first network device.

The apparatus includes a processing unit and a transceiver unit. The transceiver unit is configured to receive a first packet, and then send a first detection packet to a second network device, where the first packet includes an address of the second network device. The processing unit is configured to determine, when determining that the transceiver unit does not receive a response packet of the first detection packet, that a route to the second network device is unreachable.

In a possible implementation of the second aspect, the first network device is a relay device, and the second network device is a gateway device.

In a possible implementation of the second aspect, the first packet is a relay discovery packet, and the transceiver unit is specifically configured to receive the relay discovery packet from the second network device.

In a possible implementation of the second aspect, the first packet is a redirection packet, and the transceiver unit is specifically configured to receive the redirection packet from a third network device, where the redirection packet is a packet generated based on a relay discovery packet from the second network device, and the third network device is a relay device different from the first network device.

In a possible implementation of the second aspect, the first network device is a gateway device, the second network device is a relay device, and the first packet is a relay advertisement packet.

In a possible implementation of the second aspect, after the processing unit determines that the route to the second network device is unreachable, the transceiver unit is further configured to send a relay discovery packet.

In a possible implementation of the second aspect, after the processing unit determines that the route to the second network device is unreachable, the transceiver unit is further configured to send a relay discovery packet to a fourth network device, where the fourth network device is a relay device different from the second network device.

In a possible implementation of the second aspect, the processing unit is configured to determine, when determining that a quantity of times of sending the first detection packet reaches a threshold and the transceiver unit does not receive the response packet of the first detection packet within preset duration, that the response packet of the first detection packet is not received. Alternatively, the processing unit starts a first timer when the transceiver unit sends the first detection packet, and determines, when determining that the transceiver unit does not receive the response packet of the first detection packet after the first timer expires, that the response packet of the first detection packet is not received.

In a possible implementation of the second aspect, the first detection packet includes first indication information indicating to enable route detection and second indication information indicating a first detection manner.

In a possible implementation of the second aspect, the first detection packet includes first indication information indicating to enable route detection and third indication information indicating a second detection manner.

In a possible implementation of the second aspect, the first detection packet further includes a parameter indicating a sending frequency of the first detection packet and a parameter indicating a sending frequency of a second detection packet, and the second detection packet is used to determine that a route is reachable.

The transceiver unit is further configured to send the second detection packet to the second network device, where the sending frequency of the second detection packet is higher than the sending frequency of the first detection packet.

The processing unit determines, when determining that the transceiver unit does not receive a response packet of the second detection packet, that the route to the second network device is unreachable.

In a possible implementation of the second aspect, the second detection packet is a bidirectional forwarding detection BFD packet or a network quality analysis NQA packet.

In a possible implementation of the second aspect, the sending frequency of the first detection packet is 0.

In a possible implementation of the second aspect, the first detection packet is a BFD packet or an NQA packet.

In the second aspect of embodiments of this application, composition modules of the route detection apparatus may be further configured to perform steps performed in the possible implementations of the first aspect, and implement corresponding technical effects. For details, refer to the first aspect. Details are not described herein again.

A third aspect of embodiments of this application provides a route detection apparatus, including at least one processor, where the at least one processor is coupled to a memory. The memory is configured to store a program or instructions. The at least one processor is configured to execute the program or the instructions, so that the apparatus implements the method according to any one of the first aspect or the possible implementations of the first aspect.

A fourth aspect of embodiments of this application provides a route detection apparatus, including at least one logic circuit and an input/output interface, where the logic circuit is configured to perform the method according to any one of the first aspect or the possible implementations of the first aspect.

A fifth aspect of embodiments of this application provides a computer-readable storage medium, configured to store computer-executable instructions. When the computer-executable instructions are executed by a processor, the processor performs the method according to any one of the first aspect or the possible implementations of the first aspect.

A sixth aspect of embodiments of this application provides a computer program product (or referred to as a computer program). When the computer program product is executed by a processor, the processor performs the method according to any one of the first aspect or the possible implementations of the first aspect.

A seventh aspect of embodiments of this application provides a chip system. The chip system includes at least one processor, configured to support a route detection apparatus in implementing a function in any one of the first aspect or the possible implementations of the first aspect.

In a possible design, the chip system may further include a memory. The memory is configured to store program instructions and data that are necessary for the route detection apparatus. The chip system may include a chip, or may include a chip and another discrete component. Optionally, the chip system further includes an interface circuit, and the interface circuit provides program instructions and/or data for the at least one processor.

An eighth aspect of embodiments of this application provides a route detection system. The route detection system includes the route detection apparatus according to the third aspect or the route detection apparatus according to the fourth aspect.

For technical effects achieved by any one of the designs of the second aspect to the eighth aspect, refer to the technical effects achieved by the different implementations of the first aspect. Details are not described herein again.

### BRIEF DESCRIPTION OF DRAWINGS

To describe the technical solutions in embodiments of the present invention or in a current technology more clearly, the following briefly describes the accompanying drawings for describing embodiments or the current technology.
FIG. 1 is a schematic diagram of an application scenario according to an embodiment of this application;
FIG. 2 is another schematic diagram of an application scenario according to an embodiment of this application;
FIG. 3 is a schematic diagram of a route detection method according to an embodiment of this application;
FIG. 4 is a schematic diagram of a packet format according to an embodiment of this application;
FIG. 5 is another schematic diagram of a route detection method according to an embodiment of this application;
FIG. 6 is still another schematic diagram of a route detection method according to an embodiment of this application;
FIG. 7 is a schematic diagram of a route detection apparatus according to an embodiment of this application;
FIG. 8 is another schematic diagram of a route detection apparatus according to an embodiment of this application; and
FIG. 9 is a schematic diagram of a route detection system according to an embodiment of this application.

### DESCRIPTION OF EMBODIMENTS

The following describes the technical solutions in embodiments of the present invention with reference to the accompanying drawings in embodiments of the present invention.

The terms "system" and "network" may be used interchangeably in embodiments of this application. "At least one" means one or more, and "a plurality of" means two or more. The term "and/or" describes an association relationship between associated objects and represents that three relationships may exist. For example, A and/or B may represent the following cases: Only A exists, both A and B exist, and only B exists, where A and B may be singular or plural. The character "/" usually indicates an "or" relationship between the associated objects. "At least one of the following items (pieces)" or a similar expression thereof means any combination of these items, including any combination of singular items (pieces) or plural items (pieces). For example, "at least one of A, B, and C" includes A, B, C, AB, AC, BC, or ABC. In addition, unless otherwise specified, ordinal numbers such as "first" and "second" mentioned in embodiments of this application are used to distinguish between a plurality of objects, but are not used to limit a sequence, a time sequence, priorities, or importance of the plurality of objects.

It should be noted that, in this application, a word such as "example" or "for example" is used to represent giving an example, an illustration, or a description. Any embodiment or design solution described as an "example" or "for example" in this application should not be explained as being more preferred or having more advantages than another embodiment or design solution. Exactly, use of the word such as "example" or "for example" is intended to present a relative concept in a specific manner.

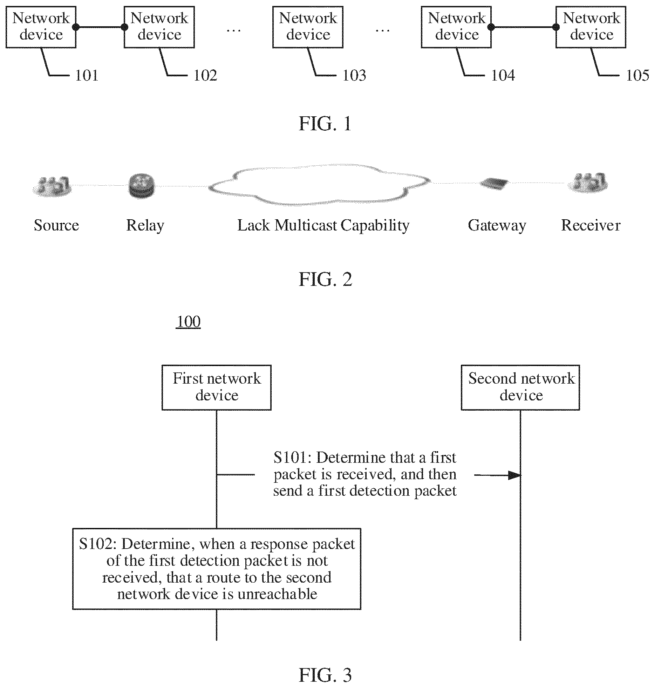

FIG. 1 is a schematic diagram of an architecture of a route detection system according to an embodiment of this application. As shown in FIG. 1, the system includes a plurality of network devices, for example, a network device 101, a network device 102, a network device 103, a network device 104, a network device 105, and another network device that may exist.

Optionally, in FIG. 1, the network device 101, the network device 102, the network device 103, the network device 104, and the network device 105 are devices such as a router (router), a switch (switch), and a virtual machine.

In a communication system shown in FIG. 1, different network devices may support a plurality of communication modes, for example, unicast, multicast, or broadcast. This application mainly relates to a multicast communication mode between different devices.

Multicast refers to a communication method for transmitting a multicast packet between a sender and a plurality of receivers (receivers) in a network. The sender may also be referred to as a multicast source (source).

Optionally, in multicast communication, the sender may be the network device shown in FIG. 1 or another device (for example, a terminal device) connected to the network device shown in FIG. 1, and the receiver may be the network device shown in FIG. 1 or another device (for example, a terminal device) connected to the network device shown in FIG. 1. A multicast packet sent by the sender needs to be forwarded through one or more network devices, so that the receiver can receive the multicast packet.

Multicast is widely used in network services such as an internet protocol television (internet protocol television, IPTV) service, a real-time data transmission service, and a multimedia conference service. Compared with unicast, multicast can save network bandwidth and reduce network load more effectively, but requires that all data communication devices in the entire network support multicast transmission.

Currently, due to a policy of a service provider or a network restriction, some intermediate nodes between the sender and the receiver may lack a multicast capability. As a result, transmission of the multicast packet cannot be implemented. For example, in a scenario shown in FIG. 2, a device included in a network and the network that lack a multicast capability (lack multicast capability) cannot send a corresponding multicast packet from the source to the receiver.

An AMT technology is defined in the request for comments (request for comments, RFC) 7450 to resolve the foregoing problem. The essence of the AMT technology is to traverse, through unicast forwarding, a multicast packet through the device and the network that lack the multicast capability, and an existing network infrastructure is unchanged or slightly changed. In the RFC 7450, roles such as a relay device (namely, a device connected to a multicast sending source or a leaf node of a multicast network) and a gateway device (namely, a device connected to a multicast receiving terminal) are further defined. The relay device is connected to the gateway device via the network that lacks the multicast capability. In other words, the relay device may be referred to as a root node of the network, and the gateway device may be referred to as a leaf node of the network.

For example, as shown in FIG. 2, a main task of the AMT network is to perform AMT and user datagram protocol (user datagram protocol, UDP) encapsulation on the multicast packet, and when a network domain through which the relay device and the gateway device traverse does not support a multicast function, convert the multicast packet (including traffic control information, data information, and the like) into a unicast packet for communication, to implement information interconnection between the relay device and the gateway device. Specifically, when the multicast packet is forwarded from the multicast source to the relay device, the relay device encapsulates the multicast packet into an IP/UDP unicast packet as required, and forwards the IP/UDP unicast packet to the corresponding gateway device that needs the multicast packet, and the gateway device then decapsulates and removes an IP/UDP unicast packet header, and continues multicast forwarding, so that the multicast receiver (receiver) receives the multicast packet.

An implementation procedure of the AMT network includes an implementation phase of relay discovery (Relay Discovery). In this implementation phase, the gateway device sends a relay discovery packet carrying an anycast address (anycast address) to "discover (or search for)" a nearest relay device in a corresponding network segment, and uses a randomly generated random nonce (random nonce) to ensure subsequent procedure verification. After receiving the relay discovery packet, the relay device sends a relay advertisement (relay advertisement) packet carrying the random nonce to notify the gateway device of a unicast address of the relay device. After this implementation phase, the gateway device determines the relay device with which the gateway device needs to interact and the unicast address of the relay device, and may subsequently receive a multicast packet based on the unicast address.

During long-term running of the network, because a device (or a link where the device resides) is faulty, it may be inevitable that a route to the device is unreachable. In the AMT network, if a route to a device is unreachable, multicast traffic passing through the device may be interrupted.

To detect a fault in the AMT network, in a possible implementation, because the AMT protocol is not a multicast routing management protocol, an IGMP and MLD are needed in the AMT network to manage, communicate, and update information about multicast group members. This also means that a keepalive mechanism, security, and monitoring of data exchanged between the relay and the gateway also depend on default settings of the IGMP and MLD routing management protocols. For example, in the IGMP, common query (common query) information is sent and received every 60 seconds (s) by default to query statuses of all multicast group members, and response time of a receiver to the common query information ranges from 1s to 10s. In addition, even if any response from the multicast group members is not received, the receiver still needs to send specific query (specific query) information at a default interval of 1s to perform a group-specific query.

It can be learned from the foregoing implementation process that the implementation process based on the IGMP is excessively cumbersome and the fault of the device cannot be found in time. It can be learned that, no effective detection mechanism exists between different devices in the current AMT network. Because a fault of the device is not sensed for a long time, multicast traffic is easily interrupted, and stability of multicast communication is affected.

To resolve the foregoing problem, embodiments of this application provide a route detection method and apparatus, so that a network device in an AMT network senses a fault of another network device in time. This avoids a case in which multicast traffic is interrupted for a long time because a device fault is not sensed for a long time, and helps improve stability of multicast communication. The following further describes embodiments of this application in detail with reference to the accompanying drawings.

FIG. 3 is a schematic diagram of a route detection method 100 according to this application. The route detection method 100 includes the following steps.

S101: A first network device determines that a first packet is received, and then sends a first detection packet.

In this embodiment, in step S101, the first network device determines that the first packet is received, and then sends the first detection packet. Correspondingly, a second network device receives the first detection packet in step S101. The first packet includes an address of the second network device.

S102: The first network device determines, when a response packet of the first detection packet is not received, that a route to the second network device is unreachable.

In this embodiment, after sending the first detection packet in step S101, the first network device determines, when determining that the response packet of the first detection packet is not received, that the route to the second network device is unreachable.

In a possible implementation, the route detection method 100 shown in FIG. 3 is applied to an AMT network. The first detection packet sent by the first network device in step S101 may have a plurality of implementations. For example, the first detection packet may be an AMT packet, and for another example, the first detection packet may be a non-AMT packet. Further descriptions are provided below.

Implementation 1: When the first detection packet is the AMT packet, the first detection packet includes first indication information indicating to enable route detection and second indication information indicating a first detection manner.

Specifically, in Implementation 1, the first detection packet may include the first indication information indicating to enable the route detection and the second indication information indicating the first detection manner, so that a receiver of the first detection packet knows that a sender of the first detection packet has used a detection process corresponding to the first detection manner, and may subsequently perform keepalive detection with the sender of the first detection packet in the first detection manner.

Optionally, the first indication information and the second indication information respectively indicate to enable the route detection and indicate the first detection manner. In actual application of the solution, the first indication information and the second indication information may be implemented by using a same field in the first detection packet, or may be implemented by using different fields in the first detection packet. This is not limited herein.

Implementation 2: When the first detection packet is the AMT packet, the first detection packet includes first indication information indicating to enable route detection and third indication information indicating a second detection manner.

Specifically, in Implementation 2, the first detection packet may include the first indication information indicating to enable the route detection and the third indication information indicating the second detection manner, so that a receiver of the first detection packet knows that a sender of the first detection packet has used a detection process corresponding to the second detection manner, and may subsequently perform keepalive detection with the sender of the first detection packet in the second detection manner.

Optionally, the first indication information and the third indication information respectively indicate to enable the route detection and indicate the second detection manner. In actual application of the solution, the first indication information and the third indication information may be implemented by using a same field in the first detection packet, or may be implemented by using different fields in the first detection packet. This is not limited herein.

In a possible implementation, in Implementation 2, the first detection packet further includes a parameter indicating a sending frequency of the first detection packet and a parameter indicating a sending frequency of a second detection packet, and the second detection packet is used to determine that a route is reachable. The method further includes: The first network device sends the second detection packet to the second network device, where the sending frequency of the second detection packet is higher than the sending frequency of the first detection packet. The first network device determines, when a response packet of the second detection packet is not received, that the route to the second network device is unreachable. Specifically, when detecting the second network device based on the first detection packet, the first network device may further detect the second network device based on the second detection packet, where the sending frequency of the second detection packet is higher than the sending frequency of the first detection packet. Therefore, when performing keepalive detection on the second network device based on the first detection packet with a lower detection frequency, the first network device may further implement keepalive detection on the second network device based on the second detection packet with a higher frequency, so as to improve sensitivity of keepalive detection.

In a possible implementation, in Implementation 2, the sending frequency of the first detection packet is 0. Specifically, when the first detection packet includes the first indication information indicating to enable the route detection and the third indication information indicating the second detection manner, the first network device uses the detection process corresponding to the second detection manner, in other words, the first network device uses a detection process of the first detection packet and the second detection packet. In this case, signaling overheads can be reduced by setting the sending frequency of the first detection packet to 0. In addition, when the first detection packet is the AMT packet and the second detection packet is the non-AMT packet, the first network device may trigger, by using the AMT packet (namely, the first detection packet), the non-AMT packet (namely, the second detection packet) used to determine that a route is reachable, so that different network devices in the AMT network can implement keepalive detection based on the triggering of the AMT packet by using the non-AMT packet with a high sending frequency.

It should be understood that, the first detection manner in Implementation 1 is different from the second detection manner in Implementation 2. The first detection manner is a detection manner of using the first detection packet. Therefore, the first detection manner may also be expressed as a detection manner of using the first detection packet, a detection manner of using a keepalive process of the first detection packet, a detection manner of using only the first detection packet, a detection manner of using only a keepalive process of the first detection packet, or another description. This is not limited herein. Similarly, the second detection manner is a detection manner of using at least two detection packets, and the at least two detection packets include the first detection packet. Therefore, the first detection manner may also be expressed as a detection manner of using the at least two detection packets, a detection manner of using a keepalive process of the at least two detection packets, or another description. This is not limited herein.

Optionally, the first detection packet is an AMT packet, and the second detection packet is a non-AMT packet. For example, the second detection packet includes a bidirectional forwarding detection (bidirectional forwarding detection, BFD) packet and/or a network quality analysis (network quality analysis, NQA) packet. Further optionally, the BFD packet includes a two-arm BFD packet or a one-arm BFD packet. Specifically, the second detection packet may include one or more of packets used to implement keepalive detection, for example, one or more of the BFD packet and the NQA packet, so as to obtain a gain of performing keepalive detection and detection with higher detection sensitivity by using a plurality of detection packets.

It should be understood that, BFD functions usually needs to be configured for both ends, in other words, both devices at a transmitting end and a receiving end of the BFD packet have the BFD functions. In this case, a BFD packet received and sent for implementing keepalive detection (or referred to as link detection or the like) may be referred to as the two-arm BFD packet. In comparison, if a peer device does not support the BFD function or the peer device is uncontrollable, in this case, a BFD packet sent and received for implementing keepalive detection (or referred to as link detection or the like) may be referred to as the one-arm BFD packet.

For example, in an implementation process of the one-arm BFD packet, a BFD session with a one-arm echo function is created on a device (for example, the first network device) supporting the BFD function, and after receiving the BFD packet, a device (for example, the second network device) not supporting the BFD function directly loops back the packet, to implement quick link detection. Therefore, when the second detection packet includes the one-arm BFD in the BFD packet, this solution is applicable to a scenario in which a receiver of the second detection packet may not support receiving and sending of the BFD packet. In this case, after receiving the BFD packet, the receiver of the second detection packet may reply with an internet control message protocol (internet control message protocol, ICMP) response packet as a response to the second detection packet. That is, the response packet of the second detection packet may be the ICMP packet.

It can be learned based on the implementation processes of the foregoing Implementation 1 and Implementation 2 that the first network device may flexibly select, on the basis of using the first detection packet, whether to use the second detection packet. For example, the second indication information indicating the first detection manner and the third indication information indicating the second detection manner may be different values of a same field in the first detection packet. The first network device may set a value of the same field in the first detection packet to a first value as an implementation of the second indication information, to indicate to use the first detection manner. Alternatively, the first network device may set a value of the same field in the first detection packet to a second value as an implementation of the third indication information, to indicate to use the second detection manner. For another example, the second indication information indicating the first detection manner and the third indication information indicating the second detection manner may be in different fields in the first detection packet. The first network device may set a value of a first field in the first detection packet to a valid value as an implementation of the second indication information, to indicate to use the first detection manner. Alternatively, the first network device may set a value of a second field in the first detection packet to a valid value as an implementation of the third indication information, to indicate to use the second detection manner. Alternatively, this is implemented in another manner. This is not limited herein. In addition, the two manners have respective corresponding beneficial effects. In actual application of the solution, either of the two manners may be selected. When the first network device indicates to use the second detection manner, a gain of performing keepalive detection and detection with higher detection sensitivity by using a plurality of detection packets (namely, at least two detection packets) may be obtained. When the first network device indicates to use the first detection manner (in other words, not to use the second detection packet), signaling overheads can be reduced.

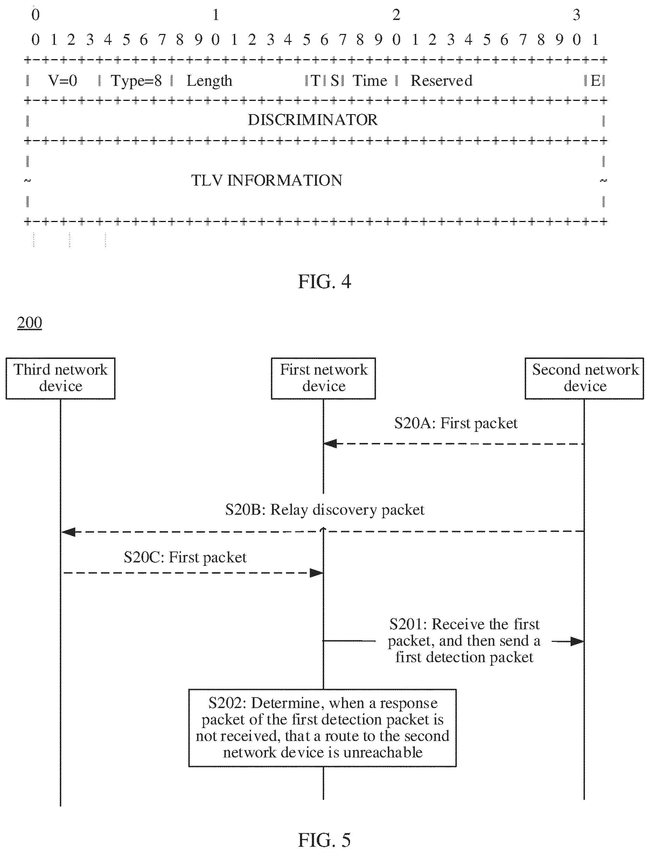

In an implementation example, the following uses an implementation process shown in FIG. 4 as an example to describe a frame format of the first detection packet. In the example shown in FIG. 4, for example, the second indication information indicating the first detection manner and the third indication information indicating the second detection manner may be different values of a same field (namely, a field T in the following) in the first detection packet. As shown in FIG. 4, the first detection packet may include the following fields:

T: If T is set to 0, it indicates that a default AMT-based keepalive manner (where, to be specific, the second indication information indicates to use the first detection manner, for example, to use the first detection packet only and not to use the second detection packet) is used. If T is set to 1, it indicates that one or more keepalive manners that are additionally used in a TLV (where, to be specific, the third indication information indicates to use the first detection manner, for example, to use the first detection packet and the second detection packet) are used.

E: If E is set to 0, it indicates that a keepalive process is used. If E is set to 1, it indicates that the keepalive process is not used.

Optionally, the first detection packet further includes the following fields:

Version (Version, denoted as V): A value of V is 0 by default, for indicating a version of an AMT protocol.

Packet type (Type): A value of the type is any value other than 0 to 7, for example, 8 shown in FIG. 4. The type indicates a type of an AMT packet, so that after receiving this type of the packet, another network device (for example, the second network device) determines, based on "Type=8", that the packet is a detection packet.

Length (Length): a byte length of a type-length-value (type-length-value, TLV) field.

S: S set to 1 represents a sender, and S set to 0 represents a receiver.

Time (Time): indicates a sending frequency (namely, a sending frequency of the first detection packet, where for example, the first detection packet may be sent every 1s by default).

Reserved (Reserved): indicates a reserved field.

Discriminator (discriminator): indicates a check character, namely, check information (optionally, a value of the discriminator information is the same as a value corresponding to a random nonce in a relay discovery packet).

TLV: An extended TLV is provided as required to add keepalive means such as BFD and NQA, so as to carry information about another detection packet in the second detection manner other than the first detection packet, for example, related information of the second detection packet, including a second sending frequency of the second detection packet, a version number corresponding to the second detection packet, and the like.

Optionally, the TLV further includes at least one of the following information:

Type (Type): A value of the type indicates a keepalive manner (namely, a keepalive manner corresponding to the second detection packet) that needs to be invoked. For example, a value of 1 may indicate that the keepalive manner corresponding to the second detection packet includes BFD, and a value of 2 may indicate that the keepalive manner corresponding to the second detection packet includes NQA (for another example, a value of 10 may indicate that the keepalive manner corresponding to the second detection packet includes BFD but does not include NQA, a value of 11 may indicate that the keepalive manner corresponding to the second detection packet includes the BFD and the NQA, and a value of 01 may indicate that the keepalive manner corresponding to the second detection packet does not include the BFD but includes the NQA).

Length (Length): a byte length of a TLV field.

Value (value): indicates a parameter invoked from a keepalive technology, for example, the second sending frequency corresponding to the second detection packet.

Further optionally, if the keepalive manner corresponding to the second detection packet uses only one keepalive manner, there may be one TLV field included in the first detection packet, in other words, there are no other TLV fields than the TLV field. In this case, one byte may be left empty to indicate that the field ends.

Further optionally, if the keepalive manner corresponding to the second detection packet uses a plurality of keepalive manners, there may be a plurality of TLVs included in the first detection packet, in other words, the first detection packet may include a plurality of TLV fields, where the plurality of TLV fields respectively correspond to the plurality of keepalive manners.

It should be understood that, in the frame format shown in FIG. 4, values of bytes (or bits) in different fields and a sequence between different fields are not limited in this application. The values of the bytes (or bits) in different fields and the sequence between different fields in the frame format shown in FIG. 4 are merely an implementation example. The values of the bytes (or bits) in different fields in the frame format shown in FIG. 4 may alternatively be other values, and the sequence between different fields in the frame format shown in FIG. 4 may alternatively be another field sequence. This is not limited herein. In addition, different fields in the frame format shown in FIG. 4 may be implemented independently.

For example, an example in which the second detection packet includes the BFD is used. The BFD may provide channel fault detection between forwarding engines with light load and quick response. These faults can be from interfaces, data links, or even the forwarding engines. In essence, the BFD is a simple "Hello (Hello)" protocol that implements link status detection by periodically sending BFD detection packets that carry parameters agreed upon by both sides. In a possible implementation, a first sending frequency corresponding to the first detection packet may be at a second level. In some strict application scenarios, keepalive detection at a millisecond (ms) level may be required. In other words, a detection frequency (which may be set to the second sending frequency corresponding to the second detection packet) that can be reached by the BFD may be required. Therefore, compared with an implementation in which keepalive detection is performed only by using the first detection packet, a gain of performing keepalive detection and detection with higher detection sensitivity by using a plurality of detection packets can be obtained.

Implementation 3: The first detection packet is the non-AMT packet. For example, the first detection packet is a BFD packet or an NQA packet. In this implementation, when the first detection packet is the BFD packet or the NQA packet, after obtaining an address of another network device, the network device in the AMT network may sense a fault of the another network device in time based on the BFD packet or the NQA packet with a high sending frequency, to implement high-sensitivity keepalive detection.

In a possible implementation, an implementation process in which the first network device determines, in step S102, that the response packet of the first detection packet is not received includes: The first network device determines, in step S102 when determining that a quantity of times of sending the first detection packet reaches a threshold and the response packet of the first detection packet is not received within preset duration, that the response packet of the first detection packet is not received. Alternatively, the first network device starts a first timer when sending the first detection packet, and determines, in step S102 when the response packet of the first detection packet is not received after the first timer expires, that the response packet of the first detection packet is not received.

Specifically, in a process in which the first network device sends the first detection packet, the first network device may accumulate the quantity of times of sending the first detection packet, and when a result of the accumulation reaches the threshold and the first network device does not receive the response packet of the first detection packet, the first network device may determine that the second network device makes no response to the first detection packet, in other words, the first network device may determine that the route to the second network device is unreachable. Alternatively, in a process in which the first network device sends the first detection packet, the first network device may start, when sending the first detection packet, the first timer corresponding to the first detection packet, and may determine, when the response packet of the first detection packet is not received after the first timer expires, that the second network device makes no response to the first detection packet, in other words, the first network device may determine that the route to the second network device is unreachable.

Optionally, when receiving the response packet of the first detection packet, the first network device determines that the route to the second network device is reachable. Correspondingly, a case in which the first network device determines that the response packet of the first detection packet is received may include: The first network device receives, after a quantity of times of sending the first detection packet reaches a threshold, one or more response packets corresponding to the first detection packet. Alternatively, the first network device starts a first timer when sending the first detection packet, and determines, before the first timer expires, that the one or more response packets corresponding to the first detection packet are received.

Optionally, in a process in which the first network device sends a plurality of first detection packets, interval duration between two consecutive times of sending the first detection packets is greater than or equal to duration (namely, duration from start to timeout of the first timer) corresponding to the first timer.

Based on the foregoing technical solution, the first network device receives the first packet including the address of the second network device, and then sends the first detection packet to the second network device based on the first sending frequency in step 5101; and determines, when determining that the response packet of the first detection packet is not received, that the route to the second network device is unreachable in step S102. In other words, after obtaining the address of the second network device from the first packet, the first network device detects the second network device based on the first detection packet, and determines, when the response packet of the first detection packet is not received, that the route to the second network device is unreachable. Therefore, after obtaining an address of another network device, a network device in the AMT network may sense a fault of the another network device in time based on the first detection packet. This avoids a case in which multicast traffic is interrupted for a long time because a device fault is not sensed for a long time, and improves stability of multicast communication.

In the implementation process shown in FIG. 3, the first network device may be a different role in the AMT network. For example, the first network device may be a relay device, a gateway device, or another device in the AMT network. Correspondingly, the first packet that includes the address of the second network device and that is obtained by the first network device may also have a plurality of implementations. Further descriptions are provided below with reference to an implementation shown in FIG. 5.

FIG. 5 is a schematic diagram of a route detection method 200 according to this application. The route detection method 200 includes the following steps.

S20A: A second network device sends a first packet.

In this embodiment, the second network device sends the first packet in step S20A, and correspondingly, a first network device receives the first packet in step S20A.

S20B: The second network device sends a relay discovery packet to a third network device.

In this embodiment, the second network device sends the relay discovery packet in step S20B, and correspondingly, the third network device receives the relay discovery packet in step S20B.

S20C: The third network device sends a first packet to the second network device.

In this embodiment, the third network device sends the first packet in step S20C, and correspondingly, the first network device receives the first packet in step S20C.

In a possible implementation, the first network device is a relay device in an AMT network, and the second network device is a gateway device in the AMT network. Specifically, the first network device may be the relay device in the AMT network, and the second network device may be the gateway device in the AMT network, so that after the relay device in the AMT network obtains an address of the gateway device, the relay device may detect the gateway device based on a first detection packet, and can sense a fault in time when the gateway device is faulty. In this implementation, the first network device may obtain the first packet in a manner of step S20A, or the first network device may obtain the first packet in a manner of step S20C. The manners are separately described below.

Manner 1: When the first network device is the relay device in the AMT network, and the second network device is the gateway device in the AMT network, the first network device obtains the first packet in the manner of step S20A.

In Manner 1, the first packet is a relay discovery packet, and that the first network device receives the first packet includes: The first network device receives the first packet from the second network device. Specifically, when the first network device is the relay device in the AMT network, and the second network device is the gateway device in the AMT network, the first packet may be a relay discovery (relay discovery) packet sent by the gateway device in the AMT network, where the relay discovery packet is used to discover the relay device. Therefore, when the relay device is used as the first network device to perform the technical solution, after the relay device receives the relay discovery packet from the gateway device to obtain an address of the gateway device, in other words, when the relay device determines that multicast traffic may be subsequently sent to the gateway device, the relay device may use a process of sending the first detection packet, so as to detect the gateway device, and can sense a fault in time when the gateway device is faulty.

Manner 2: When the first network device is the relay device in the AMT network and the second network device is the gateway device in the AMT network, the first network device obtains the first packet in the manner of step S20C.

In Manner 2, the first packet is a redirection packet, and that the first network device receives the first packet includes: The first network device receives the first packet from the third network device in step S20C. The first packet is a packet generated by the third network device based on the relay discovery packet after the third network device receives the relay discovery packet from the second network device in step S20B. The third network device is a relay device different from the first network device. Specifically, when the first network device is the relay device in the AMT network, and the second network device is the gateway device in the AMT network, the first packet may be the redirection packet sent by the third network device that is in the AMT network and that is different from the first network device, and the third network device is the relay device different from the first network device. The redirection packet carries an address of the gateway device for indicating the first network device to process a multicast access request of the gateway device. Therefore, when the relay device is used as the first network device to perform the technical solution, after the relay device receives a redirection packet from another relay device to obtain an address of the gateway device, in other words, when the relay device determines that multicast traffic is to be subsequently sent to the gateway device, the relay device may use a process of sending the first detection packet, so as to detect the gateway device, and can sense a fault in time when the gateway device is faulty.

In another possible implementation, the first network device is a gateway device in an AMT network, the second network device is a relay device in the AMT network, and the first packet is a relay advertisement packet. In addition, the first network device obtains the first packet in a manner of step S20A. Specifically, when the first network device is the gateway device in the AMT network, and the second network device is the relay device in the AMT network, the first packet may be a relay advertisement (relay advertisement) packet sent by the gateway device in the AMT network, and the relay advertisement packet is used to advertise information about the relay device. Therefore, when the gateway device is used as the first network device to perform the technical solution, after the gateway device receives the relay advertisement packet from the relay device to obtain an address of the relay device, in other words, when the gateway device determines that multicast traffic from the relay device may be subsequently received, the gateway device may use a process of sending the first detection packet, so as to detect the relay device, and can sense a fault in time when the relay device is faulty.

S201: The first network device determines that the first packet is received, and then sends the first detection packet.

In this embodiment, in step S201, the first network device determines that the first packet is received, and then sends the first detection packet. Correspondingly, the second network device receives the first detection packet in step S201. The first packet includes an address of the second network device.

S202: The first network device determines, when a response packet of the first detection packet is not received, that a route to the second network device is unreachable.

In this embodiment, after sending the first detection packet in step S201, the first network device determines, in step S202 when determining that the response packet of the first detection packet is not received, that the route to the second network device is unreachable.

It should be noted that, for implementation processes of step S201 and step S202, refer to the implementation processes of step S101 and step S102 in the foregoing embodiment, and corresponding technical effects are achieved. Details are not described herein again.

In a possible implementation, when the first network device is the gateway device in the AMT network, and the second network device is the relay device in the AMT network, after that the first network device determines in step S202 that a route to the second network device is unreachable, the method further includes: The first network device sends a relay discovery packet. For example, the first network device sends the relay discovery packet to a fourth network device, where the fourth network device is another relay device different from the second network device. Specifically, after the gateway device in the AMT network determines in step S202 that the route to the relay device is unreachable, the gateway device may resend the relay discovery packet, to discover a new relay device (for example, the fourth network device) and obtain multicast traffic from the new relay device.

In another possible implementation, when the first network device is the relay device in the AMT network, and the second network device is the gateway device in the AMT network, after that the first network device determines in step S202 that a route to the second network device is unreachable, the method further includes: The first network device clears internet group management protocol (internet group management protocol, IGMP) entries or multicast listener discovery protocol (multicast listener discovery, MLD) entries of the second network device; and/or stops sending multicast traffic to the second network device. Specifically, after the relay device in the AMT network determines in step S202 that the route to the gateway device is unreachable, the relay device may clear the IGMP entries or the MLD entries of the gateway device, so as to remove the gateway device from a multicast group. In addition, after the relay device in the AMT network senses that the route to the gateway device is unreachable, the relay device may also determine to stop sending the multicast traffic to the second network device, so as to reduce unnecessary overheads.

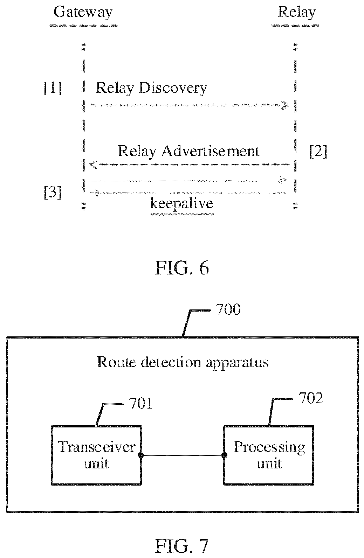

In addition, if the first network device and the second network device are respectively the relay device and the gateway device, or the first network device and the second network device are respectively the gateway device and the relay device, an interaction process between the relay device and the gateway device in the foregoing embodiment may be further implemented in an implementation shown in FIG. 6.

In an implementation, when the first network device is the relay device in the AMT network and the second network device is the gateway device in the AMT network, the first packet may be a relay discovery packet corresponding to step 1 in FIG. 6. The first detection packet and the response packet of the first detection packet (and a second detection packet and a response packet of the second detection packet that may exist) may be implemented by using a keepalive (keepalive) detection process corresponding to step 3 in FIG. 6. Optionally, an execution sequence of a relay advertisement packet sent by the relay device in step 2 may be located before step 3, or may be located after step 3. This is not limited herein.

In another implementation, when the first network device is the gateway device in the AMT network, and the second network device is the relay device in the AMT network, the first packet may be a relay advertisement packet corresponding to step 1 in FIG. 6. The first detection packet and the response packet of the first detection packet (and a second detection packet and a response packet of the second detection packet that may exist) may be implemented by using a keepalive (keepalive) detection process corresponding to step 3 in FIG. 6.

It can be learned from the implementation shown in FIG. 6 that, in the AMT network, after receiving the relay discovery packet carrying an address of the gateway device or receiving the relay advertisement packet carrying an address of the relay device, the relay device uses the keepalive detection process corresponding to step 3 in FIG. 6, in other words, uses an interaction process between the first detection packet and the response packet of the first detection packet (and the second detection packet and the response packet of the second detection packet that may exist).

In addition, in an implementation process of a keepalive detection function, a transmitting end of the detection packet creates a timer, and periodically sends a keepalive detection packet, and a counter at the transmitting end of the detection packet starts counting (to be specific, each time a detection packet is sent, a count value is increased by 1). For a receiving end of the detection packet, each time the receiving end receives a detection packet, the receiving end sends a response packet (namely, a response packet of the detection packet) to the transmitting end. In addition, if a response packet is received before the count value of the counter at the transmitting end of the detection packet reaches a preset value, it indicates that a peer end is reachable, and a count value indicating that the peer end is unreachable is cleared. If the count value of the counter at the transmitting end of the detection packet reaches a preset value: retry times (Retry Times), but no response packet is received, it is considered that a peer end is unreachable.

It should be understood that, in the foregoing implementation process, an example in which the first network device and the second network device are respectively the relay device and the gateway device, or the first network device and the second network device are respectively the gateway device and the relay device is used. In actual application, the first network device and the second network device may alternatively be same devices in the AMT network. For example, both the first network device and the second network device are the relay devices, or both the first network device and the second network device are the gateway devices. In addition, either of the first network device and the second network device is another role in the AMT network, for example, a multicast source, a multicast receiver (receiver), or another role defined in a future AMT network. This is not limited herein.

Refer to FIG. 7. Embodiments of this application provide a route detection apparatus. The route detection apparatus 700 can implement functions of the route detection apparatus (namely, the first network device) in the foregoing method embodiments, and therefore can also achieve beneficial effects of the foregoing method embodiments.

The route detection apparatus 700 includes a transceiver unit 701 and a processing unit 702.

The transceiver unit 701 is configured to receive a first packet, and then send a first detection packet to a second network device, where the first packet includes an address of the second network device.

The processing unit 702 is configured to determine, when determining that the transceiver unit 701 does not receive a response packet of the first detection packet, that a route to the second network device is unreachable.

In a possible implementation, the first network device is a relay device, and the second network device is a gateway device.

In a possible implementation, the first packet is a relay discovery packet, and the transceiver unit 701 is specifically configured to receive the relay discovery packet from the second network device.

In a possible implementation, the first packet is a redirection packet, and the transceiver unit 701 is specifically configured to receive the redirection packet from a third network device, where the redirection packet is a packet generated based on a relay discovery packet from the second network device, and the third network device is a relay device different from the first network device.

In a possible implementation, the first network device is a gateway device, the second network device is a relay device, and the first packet is a relay advertisement packet.

In a possible implementation, after the processing unit 702 determines that the route to the second network device is unreachable, the transceiver unit 701 is further configured to send a relay discovery packet.

In a possible implementation, after the processing unit 702 determines that the route to the second network device is unreachable, the transceiver unit is further configured to send a relay discovery packet to a fourth network device, where the fourth network device is a relay device different from the second network device.

In a possible implementation, the processing unit 702 is configured to determine, when determining that a quantity of times of sending the first detection packet reaches a threshold and the transceiver unit 701 does not receive the response packet of the first detection packet within preset duration, that the response packet of the first detection packet is not received. Alternatively, the processing unit 702 starts a first timer when the transceiver unit 701 sends the first detection packet, and determines, when determining that the transceiver unit 701 does not receive the response packet of the first detection packet after the first timer expires, that the response packet of the first detection packet is not received.

In a possible implementation, the first detection packet includes first indication information indicating to enable route detection and second indication information indicating a first detection manner.

In a possible implementation, the first detection packet includes first indication information indicating to enable route detection and third indication information indicating a second detection manner.

In a possible implementation, the first detection packet further includes a parameter indicating a sending frequency of the first detection packet and a parameter indicating a sending frequency of a second detection packet, and the second detection packet is used to determine that a route is reachable. The transceiver unit 701 is further configured to send the second detection packet to the second network device, where the sending frequency of the second detection packet is higher than the sending frequency of the first detection packet. The processing unit 702 determines, when determining that the transceiver unit 701 does not receive a response packet of the second detection packet, that the route to the second network device is unreachable.

In a possible implementation, the second detection packet is a BFD packet or an NQA packet.

In a possible implementation, the sending frequency of the first detection packet is 0.

In a possible implementation, the first detection packet is a BFD packet or an NQA packet.

It should be noted that, for specific content such as an information execution process of the units of the route detection apparatus 700, refer to the descriptions in the foregoing method embodiments of this application. Details are not described herein again.

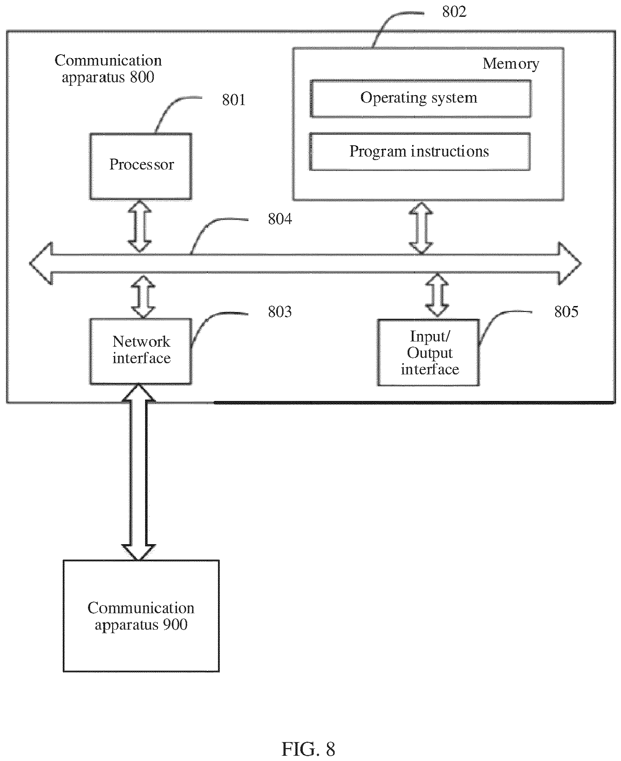

Embodiments of this application further provide a communication apparatus 800. FIG. 8 is a schematic diagram of a structure of the communication apparatus 800 according to an embodiment of this application.

Optionally, the communication apparatus 800 performs functions of the first network device in FIG. 3 and related embodiments. A communication apparatus 900 performs functions of the second network device in FIG. 3 and related embodiments.

The communication apparatus 800 shown in FIG. 8 includes a memory 802 and at least one processor 801.

Optionally, the processor 801 implements the method in the foregoing embodiments by reading instructions stored in the memory 802. Alternatively, the processor 801 may implement the method in the foregoing embodiments by using instructions in an internal storage. When the processor 801 implements the method in the foregoing embodiments by reading the instructions stored in the memory 802, the memory 802 stores the instructions for implementing the method provided in the foregoing embodiments of this application.

Optionally, the at least one processor 801 may be one or more CPUs, or may be a single-core CPU, or may be a multi-core CPU.

Further optionally, the at least one processor 801 may be further configured to perform an implementation process corresponding to the processing unit 702 in the embodiment shown in FIG. 7, and achieve corresponding beneficial effects. Details are not described herein again.

The memory 802 includes but is not limited to a RAM, a ROM, an EPROM, a flash memory, or an optical memory. The memory 802 stores instructions of an operating system.

After the program instructions stored in the memory 802 are read by the at least one processor 801, the communication apparatus performs corresponding operations in the foregoing embodiments.

Optionally, the communication apparatus shown in FIG. 8 further includes a network interface 803. The network interface 803 may be a wired interface, for example, an FDDI or a GE interface, or the network interface 803 may be a wireless interface. The network interface 803 is configured to receive and send data in FIG. 3 and related embodiments.

Further optionally, the network interface 803 may be further configured to perform an implementation process corresponding to the transceiver unit 701 in the embodiment shown in FIG. 7, and achieve corresponding beneficial effects. Details are not described herein again.

It should be understood that, the network interface 803 has functions of receiving data and sending data. The function of "receiving data" and the function of "sending data" may be integrated into a same transceiver interface for implementation, or the function of "receiving data" and the function of "sending data" may be separately implemented in different interfaces. This is not limited herein. In other words, the network interface 803 may include one or more interfaces, configured to implement the function of "receiving data" and the function of "sending data".

For other functions that can be performed by the communication apparatus 800 after the processor 801 reads the program instructions in the memory 802, refer to the descriptions in the foregoing method embodiments.

Optionally, the communication apparatus 800 further includes a bus 804. The processor 801 and the memory 802 are usually connected to each other through the bus 804, or may be connected to each other in another manner.

Optionally, the communication apparatus 800 further includes an input/output interface 805. The input/output interface 805 is configured to connect to an input device, and receive related configuration information that is input by a user or another device that can be connected to the communication apparatus 800 by using the input device. The input device includes, but is not limited to, a keyboard, a touchscreen, and a microphone.

The communication apparatus 800 provided in embodiments of this application is configured to perform the method performed by the communication apparatus (the first network device or a server) provided in the foregoing method embodiments, and achieves corresponding beneficial effects.

For example, when the communication apparatus 800 performs functions of the first network device in FIG. 3 and related embodiments, and the communication apparatus 900 performs functions of the second network device in FIG. 3 and related embodiments, the communication apparatus 800 receives a first packet that includes an address of the communication apparatus 900, and then sends a first detection packet to the communication apparatus 900; and determines, when the communication apparatus 800 does not receive a response packet of the first detection packet, that a route to the communication apparatus 900 is unreachable. In other words, after obtaining the address of the communication apparatus 900 from the first packet, the communication apparatus 800 detects the communication apparatus 900 based on the first detection packet, and determines, when the response packet of the first detection packet is not received, that the route to the communication apparatus 900 is unreachable. Therefore, after obtaining an address of another network device, a network device in an AMT network may sense a fault of the another network device in time based on the first detection packet. This avoids a case in which multicast traffic is interrupted for a long time because a device fault is not sensed for a long time, and improves stability of multicast communication.

For specific implementations of the communication apparatus shown in FIG. 8, refer to the descriptions in the foregoing method embodiments. Details are not described herein again.

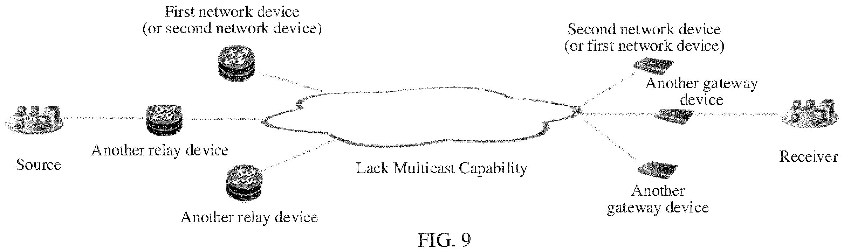

Embodiments of this application further provide a communication system. FIG. 9 is a schematic diagram of the communication system according to an embodiment of this application. As shown in FIG. 9, a first network device and a second network device in this application may be applied to an AMT network. The AMT network may include a multicast source (for example, a "source" in FIG. 9) and a multicast receiver (for example, a "receiver" in FIG. 9). In FIG. 9, the first network device and the second network device may be respectively used as a relay device and a gateway device in the AMT network, or the first network device and the second network device may be respectively used as a gateway device and a relay device in the AMT network. Optionally, the AMT network further includes another relay device, another gateway device, and the like.

As an implementation example, in the communication system shown in FIG. 9, when the first network device and the second network device use the method in the foregoing embodiments, the first network device receives a first packet including an address of the second network device, and then sends a first detection packet to the second network device; and determines, when a response packet of the first detection packet is not received, that a route to the second network device is unreachable. In other words, after obtaining the address of the second network device from the first packet, the first network device detects the second network device based on the first detection packet, and determines, when the response packet of the first detection packet is not received, that the route to the second network device is unreachable. Therefore, after obtaining an address of another network device, a network device in the AMT network may sense a fault of the another network device in time based on the first detection packet. This avoids a case in which multicast traffic is interrupted for a long time because a device fault is not sensed for a long time, and improves stability of multicast communication.

It should be understood that, in the communication system shown in FIG. 9, the first network device and the second network device may further use other methods in the foregoing embodiments, and achieve corresponding technical effects. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

In conclusion, the foregoing embodiments are merely intended for describing the technical solutions of this application, but not for limiting this application. Although this application is described in detail with reference to the foregoing embodiments, persons of ordinary skill in the art can understand that they may still make modifications to the technical solutions described in the foregoing embodiments or make equivalent replacements to some technical features thereof, without departing from the scope of the technical solutions of embodiments of this application.

## Claims

1. A route detection method, wherein the method is applied to an automatic multicast tunneling, AMT, network, and the method comprises:
receiving, by a first network device, a first packet, and then sending, to a second network device, a first detection packet used to determine that a route is reachable, wherein the first packet comprises an address of the second network device; and
determining, by the first network device when a response packet of the first detection packet is not received, that a route to the second network device is unreachable.

2. The method according to claim 1, wherein the first network device is a relay device, and the second network device is a gateway device.

3. The method according to claim 2, wherein the first packet is a relay discovery packet, and the receiving, by a first network device, a first packet comprises:
receiving, by the first network device, the relay discovery packet from the second network device.

4. The method according to claim 2, wherein the first packet is a redirection packet, and the receiving, by a first network device, a first packet comprises:
receiving, by the first network device, the redirection packet from a third network device, wherein the redirection packet is a packet obtained based on a relay discovery packet from the second network device, and the third network device is a relay device different from the first network device.

5. The method according to claim 1, wherein the first network device is a gateway device, the second network device is a relay device, and the first packet is a relay advertisement packet.

6. The method according to claim 5, wherein after the determining, by the first network device, that the route to the second network device is unreachable, the method further comprises:
sending, by the first network device, a relay discovery packet to a fourth network device, wherein the fourth network device is a relay device different from the second network device.

7. The method according to any one of claims 1 to 6, wherein the method further comprises:
determining, by the first network device when determining that a quantity of times of sending the first detection packet reaches a threshold and the response packet of the first detection packet is not received within preset duration, that the response packet of the first detection packet is not received; or
starting, by the first network device, a first timer when sending the first detection packet, and determining, when the response packet of the first detection packet is not received after the first timer expires, that the response packet of the first detection packet is not received.

8. A route detection apparatus, wherein the apparatus is disposed in a first network device in an automatic multicast tunneling, AMT, multicast network, and the apparatus comprises a processing unit and a transceiver unit, wherein
the transceiver unit is configured to receive a first packet, and then send, to a second network device, a first detection packet used to determine that a route is reachable, wherein the first packet comprises an address of the second network device; and
the processing unit is configured to determine, when determining that the transceiver unit does not receive a response packet of the first detection packet, that a route to the second network device is unreachable.

9. The apparatus according to claim 8, wherein the first network device is a relay device, and the second network device is a gateway device.

10. The apparatus according to claim 9, wherein the first packet is a relay discovery packet, and the transceiver unit is specifically configured to receive the relay discovery packet from the second network device.

11. The apparatus according to claim 9, wherein the first packet is a redirection packet, and the transceiver unit is specifically configured to receive the redirection packet from a third network device, wherein the redirection packet is a packet obtained based on a relay discovery packet from the second network device, and the third network device is a relay device different from the first network device.

12. The apparatus according to claim 8, wherein the first network device is a gateway device, the second network device is a relay device, and the first packet is a relay advertisement packet.

13. The apparatus according to claim 12, wherein after the processing unit determines that the route to the second network device is unreachable, the transceiver unit is further configured to send a relay discovery packet to a fourth network device, wherein the fourth network device is a relay device different from the second network device.

14. The apparatus according to any one of claims 8 to 13, wherein
the processing unit determines, when determining that a quantity of times of sending the first detection packet reaches a threshold and the transceiver unit does not receive the response packet of the first detection packet within preset duration, that the response packet of the first detection packet is not received; or
the processing unit starts a first timer when the transceiver unit sends the first detection packet, and determines, when determining that the transceiver unit does not receive the response packet of the first detection packet after the first timer expires, that the response packet of the first detection packet is not received.

15. The apparatus according to any one of claims 8 to 14, wherein the first detection packet comprises first indication information indicating to enable route detection and second indication information indicating a first detection manner.
